# FASCICULE DE BREVET EUROPEEN

(11) **EP 1 272 438 B1**
(45) Date de publication et mention de la délivrance du brevet: **24.03.2004**
(21) Numéro de dépôt: 01921518.5
(22) Date de dépôt: 09.04.2001
(51) Int. Cl.: C04B 35/111, C04B 35/632, C04B 35/634

(54) **PATE PRECURSEUR DE MATERIAU REFRACTAIRE**
PASTENFÖRMIGES VORPRODUKT FÜR FEUERFESTWERKSTOFFE
REFRACTORY MATERIAL PRECURSOR PASTE

(30) Priorité: 12.04.2000 FR 0004724
(43) Date de publication de la demande: 08.01.2003
(73) Titulaire: ALUMINIUM PECHINEY, 75218 Paris Cedex 16 (FR); Porteret Beaulieu Industrie SA, 21310 Bezouotte (FR)
(72) Inventeur: BARTHELEMY, Christian, F-38500 Voiron (FR); MARSAUD, Serge, F-77920 Samois sur Seine (FR); NICOLAS, Luc, F-21310 Magny-Saint-Medard (FR)
(74) Mandataire: Mougeot, Jean-Claude
(86) Numéro de dépôt international: PCT/FR2001/001066
(87) Numéro de publication internationale: WO 2001/079136

(56) Documents cités:
- WO-A-97/28941

## Description

### DOMAINE DE L'INVENTION

L'invention concerne le domaine des matériaux initialement souples et flexibles à usage réfractaire. Plus particulièrement, il concerne les matériaux qui contiennent les éléments précurseurs d'une céramique en laquelle ils se transforment lors de leur montée en température, acquérant leur réfractorité.

### ETAT DE LA TECHNIQUE - PROBLEME POSE

Les matériaux réfractaires souples sont utilisés dans de très nombreux domaines comme la sidérurgie ou l'industrie de l'aluminium. Ils sont utilisés sous forme de papiers, textiles, cordons, ...

L'élaboration des matériaux réfractaires souples implique l'utilisation de fibres réfractaires qui en sont le principal constituant. L'amiante fut utilisée de manière industrielle jusqu'à son interdiction liée à sa dangerosité avérée. Les fibres ont alors été remplacées par les fibres céramiques réfractaires qui sont des silicates amorphes généralement obtenus par fusion d'alumine et de silice. L'utilisation de ces fibres dans les matériaux réfractaires souples a connu un essor important grâce à leurs propriétés isolantes et réfractaires permettant de substantiels gains sur la consommation énergétique des procédés industriels mettant en oeuvre de hautes températures. Néanmoins des doutes subsistaient sur leur inocuité vis-à-vis de l'être humain en particulier en cas d'exposition prolongée. Des données collectées en Europe depuis 1991 et des études sur les animaux ont montré que le risque d'apparition de maladies induites par une exposition prolongée aux fibres réfractaires était réel. En conséquence, la Commission Européenne a, le 10 novembre 1997, classé les fibres céramiques réfractaires comme produit dangereux, en catégorie II (substances qui doivent être considérées comme potentiellement carcinogènes pour l'être humain). Ceci implique dorénavant un étiquetage avec tête de mort ainsi qu'une information complète sur les risques pour la santé humaine. Cette classification n'implique pas l'interdiction de l'utilisation des fibres réfractaires dans les environnements industriels, mais certaines restrictions et réglementations ont d'ores et déjà été introduites dans la législation des états membres.

Les fabricants de fibres céramiques et réfractaires travaillent dur pour trouver des solutions de remplacement et on commence à trouver certains produits comme les fibres bio-solubles à base de dolomie, mais la température d'utilisation de ces matériaux reste limitée. D'autres matériaux tels que la silice haute pureté, la cordiérite, la mullite-zircone ou les alumines de haute pureté sont testés, mais leur forme et leur coût interdisent pour le moment leur utilisation dans la plupart des applications.

On connait, du document WO97 28941, un procédé d'obtention de pièces tridimensionelles utilisant une composition comprenant des particules, par exemple en matériau céramique, un liant, par exemple un élastomer, et de préférence un dispersant, par exemple un aminopropyl triéthoxysilane.

Le problème reste donc posé de fournir comme réfractaires souples des matériaux n'incorporant pas de fibres céramiques réfractaires, possédant de bonnes propriétés isolantes et réfractaires et pour un coût économiquement acceptable dans un environnement industriel.

### DESCRIPTION DE L'INVENTION

Le premier objet de l'invention est une pâte souple susceptible de remplir les mêmes fonctions que les produits à base de fibres actuellement utilisés comme précurseurs de réfractaires souples. La pâte suivant l'invention est caractérisée en ce qu'elle contient un polymère élastomère, un agent de silylation (créateur de liaisons Si-O) et un mélange d'alumine et d'hydrate d'alumine et éventuellement un plastifiant. Lors de sa montée en température, la partie organique s'élimine et laisse place à un solide réfractaire constitué principalement d'alumine.

Le deuxième objet de l'invention est un procédé de fabrication de la pâte suivant l'invention comportant les étapes suivantes :
a) Préchauffage d'un malaxeur à une température comprise entre 40 et 60°C et de préférence entre 50° et 60°C.
b) Introduction dans le malaxeur du polymère élastomère, de l'agent silylant et des charges d'alumine et d'hydrate d'alumine.
c) Malaxage de l'ensemble jusqu'à obtenir une pâte homogène.

Le troisième objet de l'invention est un matériau souple précurseur de réfractaire se présentant sous diverses formes : granulés, joncs, bourrelets, nappes, bandes ...

Le quatrième objet de l'invention concerne l'utilisation de la pâte précurseur de réfractaire comme gaine extérieure ou gaine de bourrage d'un câble électrique ou bien comme joint ou panneau coupe-feu.

### DESCRIPTION DETAILLEE DE L'INVENTION

Le premier objet de l'invention est une pâte précurseur de réfractaire caractérisée en ce qu'elle contient un polymère élastomère chargé d'une part d'un mélange d'alumine et d'hydrate d'alumine et d'autre part d'un agent de silylation.
L'agent de silylation est un agent créateur de liaisons Si-O; on peut citer par exemple: les trialkoxysilanes, hydrolysés ou non, les silsesquioxanes, les silazanes.

L'alumine entrant dans la composition de la pâte est une alumine broyée. Cette alumine se présente typiquement suivant une granulométrie de 0,5 à 10 microns correspondant à une surface spécifique comprise entre 0.5 et 15 m²/g.

L'hydrate d'alumine entrant dans la composition a typiquement une granulométrie comprise entre 3 et 20 microns, de préférence entre 5 et 15 microns. L'hydrate d'alumine est bien connu dans le domaine des matières plastiques où il est utilisé en tant que charge pour ses propriétés ignifugeantes ; il est indispensable dans la composition de la pâte afin d'éviter la combustion du polymère lors de la première montée en température et en permettre la céramisation. Il peut être remplacé par de l'hydroxyde de magnésium qui est également utilisé pour l'ignifugation de certains polymères.

Il est connu que l'agent de silylation établit un ensemble de liaisons AI-O-Si. La demanderesse a constaté que ces liaisons rigidifient la pâte dès l'atteinte des températures où le polymère est susceptible de fluer.
Cette rigidification intervient souvent avec le temps aux températures de stockage, ce qui est à éviter pour résoudre le problème posé.
La demanderesse a constaté que ce problème ne se posait pas en utilisant un trialkoxy silane de type epoxy et plus particulièrement le (3 glycidoxy propyl) trimethoxysilane préalablement hydrolysé en silanol ou bien un silane de type amino et plus particulièrement le N-aminoethyl-3 amonopropyltrimethoxysilane non hydrolysé. Une alternative possible est l'utilisation à l'état non hydrolysé de poly(methylsilsesquioxane) ou de polysilazane.

On constate par ailleurs que certains agents de silylation bien connus ne conviennent pas. Par exemple le (4-aminopropyl)triethoxysilane ne donne pas lieu à un produit solide à haute température alors que le (mercaptoethyl) trimethoxysilane et le poly(phenyl-propylsilsesquioxane) font intervenir rapidement et à température ambiante, une rigidification prématurée du produit souple.

Le polymère élastomère appartient à la famille éthylène propylène diéne.
La demanderesse a obtenu de très bons résultats avec l'éthylène propylène diéne monomère, plus connu sous le sigle EPDM.

Pour faciliter la fabrication de la pâte, il est souhaitable d'ajouter un additif plastifiant dans des proportions de l'ordre de 0 à 10%du poids total de la pâte.

Les proportions des différents composants diffèrent selon l'utilisation ultérieure de la pâte. Une plage typique pour la plupart des applications habituelles des matériaux réfractaires souples comprend :

| | |
|---|---|
| Alumine | 30 à 40 % en poids |
| Hydrate d'alumine ou bien hydroxyde de magnésium | 30 à 40 % en poids |
| Agent silylant | 5 à 15 % en poids |
| Polymère | 10 à 20 % en poids. |
| Plastifiant | 0 à 10 % en poids |

Cette pâte peut être renforcée avec de la fibre de verre.

Le deuxième objet de l'invention est un procédé de fabrication d'une pâte précurseur de réfractaire caractérisé en ce qu'il comporte les étapes suivantes:
a) Préparation de l'agent silylant par hydrolyse.
   Cette préparation de l'agent silylant par hydrolyse est une étape du procédé qui peut être facultative.
   La préparation de l'agent silylant (quand elle est nécessaire) a lieu dans un récipient séparé agité dans lequel on ajoute de l'eau dont le pH est préalablement ajusté dans le domaine spécifiquement recommandé pour réaliser l'hydrolyse de l'agent utilisé. L'eau doit être présente dans des proportions supérieures aux proportions stoechiométriques. Typiquement le ratio du nombre de moles d'eau sur le nombre de moles d'agent de silylation est compris entre 4 et 7. Il est souhaitable que l'hydrolyse soit complète. Le temps d'agitation est de quelques minutes. L'opération est terminée lorsque la solution est limpide.
b) Préchauffage d'un malaxeur.
   Le préchauffage du malaxeur s'effectue jusqu'à une température comprise entre 40 et 60°, de préférence entre 40 et 50°C. Si le préchauffage est insuffisant, le polymère n'atteint pas une viscosité suffisante. Si la température du malaxeur est trop élevée, l'agent silylant réagit trop vite et il se produit une rigidification prématurée de la pâte.
c) Introduction dans le malaxeur du polymère, de l'agent de silylation, de l'alumine et de l'hydrate d'alumine ou bien de l'hydroxyde d'e magnésium.
   Il est parfois préférable d'introduire un additif plastifiant dans des proportions de l'ordre de 0 à 10% du poids total de la pâte. Cet additif joue également un rôle de lubrifiant.
d) Malaxage de la charge jusqu'à obtention d'une pâte homogène.
   La vitesse d'agitation du malaxeur peut être adaptée au fur et à mesure du chargement. La durée de l'opération dépend de la viscosité recherchée pour la pâte. Cette viscosité est en permanence mesurée par le couple. L'opération s'arrête lorsque le couple atteint un palier.

L'auto-échauffement de la charge ne dépasse généralement pas 85°C mais il est utile de prévoir à titre de sécurité un système de refroidissement du malaxeur qui se déclenche quand il y a un risque de dépasser 85°C.

Le troisième objet de l'invention concerne le matériau souple obtenu à partir de la pâte précurseur de réfractaire suivant l'invention.

Sous une première forme, la pâte peut être extrudée sous forme de fil ou bourrelet de section quelconque. Les produits obtenus sous cette forme ont des diamètres ou des diamètres équivalents qui varient généralement entre 4 et 25 mm. Ces produits sont classiquement utilisés comme joints de porte de four, joints d'étanchéité statique pour four, joints de lingotières dans la métallurgie, etc....

Sous une deuxième forme, la pâte peut être roulée ou pressée en nappes ou bandes souples d'épaisseur allant généralement de quelques mm à quelques cm. Les nappes ou bandes peuvent être utilisées dans les revêtements et cloisonnements intérieurs des fours industriels. La mise en place de ces revêtements est facilitée par la souplesse du matériau et la facilité avec laquelle il peut être coupé de manière précise avec des instruments ordinaires.

Sous une troisième forme, la pâte peut être découpée en granulés. Cette forme permet d'alimenter des machines en vue de la transformation ultérieure de la pâte, par exemple des extrudeuses.

Le quatrième objet de l'invention concerne l'utilisation finale de la pâte précurseur de réfractaire suivant l'invention pour diverses applications comme les joints d'étanchéité et isolants thermiques pour des utilisations à haute température et plus particulièrement :
. gaine extérieure ou gaine de bourrage d'un câble électrique.
. joint coupe-feu ou panneau coupe-feu.

Grâce à l'extrudabilité de la pâte, on peut la mettre en oeuvre comme composant de câble isolé, soit comme gaine de bourrage soit comme gaine extérieure.
Dans cette application, la pâte suivant l'invention présente des avantages importants en cas d'élévation importante et inopinée de la température : son aptitude à se rigidifier et à devenir réfractaire et isolant, tout en résistant à l'inflammation et tout en conservant les propriétés de non dégagement de gaz nocifs (grâce à l'utilisation d'hydrate d'alumine, par opposition à l'utilisation de dérivés halogénés), permet au câble électrique de conserver ses propriétés d'usage (transmission de l'électricité) dans des conditions extrêmes par exemple un incendie.

Sous forme de joint coupe-feu ou de panneau coupe-feu, le même mécanisme de rigidification et de transformation en matériau réfractaire permet à la pâte de remplacer avantageusement les matériaux souples fabriqués à partir de fibres céramiques réfractaires traditionnellement utilisés pour ces applications.

### EXEMPLES DE REALISATION

### Exemple 1

On a utilisé un malaxeur à deux rotors du type Banbury équipé d'un suivi du couple et d'un système de chauffage. Le malaxeur a été préchauffé à 60° et la vitesse d'agitation fixée à 80 tours/minute. On a commencé à mélanger 40 g de poudre d'alumine de diamètre médian 0,5 micron (Qualité P 172SB - PECHINEY) et 40 g de poudre d'hydrate d'alumine de diamètre médian 10 microns (qualité SH 100). Cette première partie du malaxage a duré 10 minutes. On a ajouté ensuite 8,8 g de (N-aminoethyl-3)aminopropyltrimethoxysilane non préalablement hydrolysé, malaxé à nouveau pendant dix minutes et vérifié que la poudre était imprégnée de manière homogène, ce qui correspondait à une valeur stabilisée du couple de malaxage. Enfin, on a ajouté 16 g d'EPDM en morceaux (monomère éthylène propylène diène) référencé Keltan 778 Z par la société DSM et 6,4 g de plastifiant (huile Primsol 352 -ESSO). On a poursuivi le malaxage pendant 20 minutes jusqu'à atteindre un palier sur la mesure du couple. La température finale était de 80°C.
La pâte ainsi obtenue a été directement laminée, puis, à température ambiante, fragmentée de manière à être introduite dans une extrudeuse bi-vis. La température est régulée entre 80 et 90C°. Le matériau est extrudé sous forme de jonc souple de 6 mm, de diamètre, sur une longueur de 1,8 mètre.
Le produit ainsi obtenu a été replié sur lui-même sans endommagement. Une montée en température, à l'air, à (300°C/heure) conduit à un produit rigide, non flué, sans variation dimensionnelle notable par rapport au jonc souple initial et sans génération de flamme. On a ensuite soumis le produit à vingt cycles de température consécutifs entre 800 et 1200°C. Le matériau reste stable d'aspect. Sa résistance mécanique (flexion trois points) est mesurée supérieure à 1 MPa.

### Exemple 2

Un autre exemple a consisté à utiliser, pour préparer la pâte, un mélangeur à rouleaux de type ouvert, typiquement utilisé dans l'industrie des élastomères;

Dans ce cas, l'agent de silylation est un trialkoxysilane préalablement hydrolysé en silanol.
On en a préparé 107 g en laboratoire en mélangeant 70 g de (3-glycidoxypropyl) trimethoxysilane et 37 g d'eau. L'hydrolyse a été effectuée à température ambiante au moyen d'eau préalablement acidifiée à pH 3,5 par de l'acide acétique. Au début de l'opération, la solution était trouble puis est devenue limpide, signe de la fin de l'hydrolyse.

Le silanol obtenu a été immédiatement mélangé à la charge minérale constituée de 500 g de poudre d'alumine de diamètre médian 0,5 micron (Qualité P 172 SB - PECHINEY) et 500 g d'hydrate d'alumine de diamètre médian 10 microns (qualité SH 100 - PECHINEY).
200 g d'EPDM (Keltan 778 Z - DSM) ont été travaillées dans le mélangeur à rouleaux et la charge décrite a été introduite progressivement en 10 min environ. Les rouleaux étaient régulés à une température de 65°C. Il n'a pas été nécessaire d'introduire de plastifiant pour obtenir une pâte homogène et souple. Une partie de cette pâte a été introduite sous forme de bande continue dans une extrudeuse mono-vis à faible taux de compression, de façon à produire un jonc de diamètre 12 mm sur une longueur de 2,5 mètres. Le reste de la pâte a été laminé sous forme de nappe de 5 mm d'épaisseur. Un traitement thermique similaire à celui décrit dans l'exemple 1 a donné des résultats équivalents pour les deux formes d'échantillons. L'échantillon sous forme de nappe, découpé en carrés de 10x10 cm et reposant sur ses coins n'a pas d'ailleurs donné lieu à un gauchissement observable.

### Exemple 3

Dans cet exemple, l'agent de silylation utilisé appartient à la famille des silsesquioxanes. Comme dans l'exemple 1, on a utilisé un malaxeur à deux rotors du type Banbury équipé d'un suivi du coupe et d'un système de préchauffage.
Le malaxeur a été préchauffé à 60°C et la vitesse d'agitation fixée à 80 tours/minute. On a commencé à mélanger 40 g de poudre d'alumine de diamètre médian 0,5 micron (Qualité P 172 SB - PECHINEY) et 40 g de poudre d'hydrate d'alumine de diamètre médian 10 microns (qualité SH 100). Cette première partie du malaxage a duré 10 minutes. On a ajouté ensuite 8 g de polymethylsilsesquioxane sous forme de solution à 600 g/litre dans du toluène, malaxé à nouveau pendant dix minutes et vérifié que la poudre était imprégnée de manière homogène, ce qui correspondait à une valeur stabilisée du couple de malaxage. Enfin, on a ajouté 16 g d' EPDM en morceaux (monomère éthylène propylène diène) référencé Keltan 778 Z par la société DSM.
L'utilisation d'un additif plastifiant n'a pas été nécessaire. On a poursuivi le malaxage pendant 10 minutes jusqu'à atteindre un palier sur la mesure du couple. La température finale était de 78°C.
La pâte ainsi obtenue a été directement laminée, puis, à température ambiante, fragmentée de manière à être introduite dans une extrudeuse bi-vis. La température est régulée entre 80 et 90°C. Le matériau est extrudé sous forme de jonc souple de 6 mm de diamètre, sur une longueur de 1,6 mètre. Les résultats obtenus au traitement thermique sont comparables à ceux exposés dans l'exemple 1.

## Revendications

1. Pâte précurseur de réfractaire **caractérisée en ce qu'**elle contient un polymère élastomère chargé d'une part d'un mélange d'alumine et d'hydrate d'alumine ou bien de l'hydroxyde de magnesium et d'autre part d'un agent de silylation.

2. Pâte suivant la revendication 1 **caractérisée en ce que** le polymère élastomère appartient à la famille éthylène propylène diène.

3. Pâte suivant les revendications 1 et 2 **caractérisée en ce que** le polymère élastomère est l'éthylène propylène diène monomère (EPDM).

4. Pâte suivant l'une des revendications 1 à 3 **caractérisée en ce que** l'alumine est une alumine broyée de granulométrie 0.5 à 10 microns correspondant à une surface spécifique de 0.5 à 15 m²/g.

5. Pâte suivant l'une quelconque des revendications 1 à 4 **caractérisée en ce que** l'hydrate d'alumine a une granulométrie comprise entre 3 et 20 microns, de préférence entre 5 et 15 microns.

6. Pâte suivant l'une quelconque des revendications 1 à 5 **caractérisée en ce que** l'agent de silylation est un trialkoxysilane porteur de fonctions organiques.

7. Pâte suivant la revendication 6 **caractérisée en ce que** l'agent de silylation est le (3-glycidoxy propil) trimethoxysilane.

8. Pâte suivant la revendication 6 **caractérisée en ce que** l'agent de silylation est le (N-aminoethyl-3) aminopropyltrimethoxysilane.

9. Pâte suivant l'une quelconque des revendications 1 à 5 **caractérisée en ce que** l'agent de silylation est un polysilsesquioxane.

10. Pâte suivant l'une quelconque des revendications 1 à 5 **caractérisée en ce que** l'agent de silylation est un polysilazane.

11. Pâte suivant l'une quelconque des revendications 1 à 10 **caractérisée en ce qu'**elle contient un additif plastifiant.

12. Pâte suivant la revendication 11 **caractérisée en ce que** la quantité d'additif est comprise entre 0 et 10% du poids total de la pâte.

13. Pâte selon les revendications 11 et 12 **caractérisée en ce que** l'additif plastifiant est l'huile Primsol 352 de Esso.

14. Pâte suivant l'une quelconque des revendications 1 à 13 **caractérisée en ce que** les proportions en poids total de la pâte sont : alumine 30 à 40%, hydrate d'alumine ou bien hydroxyde de magnésium 30 à 40%, agent de silylation 5 à 15%, polymère élastomère 10 à 20%, plastifiant 0 à 10%.

15. Procédé de fabrication d'une pâte réfractaire précurseur de matériau réfractaire suivant l'une quelconque des revendications 1 à 14 **caractérisé en ce qu'**il comporte les étapes suivantes :
a) Préchauffage du malaxeur à une température comprise entre 40 et 60°C, de préférence entre 40 et 50°C.
b) Introduction dans le malaxeur du polymère élastomère, de l'agent de silylation, de l'alumine et de l'hydrate d'alumine ou bien de l'hydroxyde de magnésium.
c) Malaxage de la charge jusqu'à obtention d'une pâte homogène.

16. Procédé suivant la revendication 15 **caractérisé en ce que** l'agent de silylation a été préalablement hydrolysé.

17. Procédé suivant l'une quelconque des revendications 15 à 16 **caractérisé en ce que** la préparation du silanol par hydrolyse est effectuée dans un récipient agité, que le silane est mélangé à de l'eau à pH contrôlé et que le ratio nombre de moles d'eau sur nombre de moles de silane est compris entre 4 et 7.

18. Procédé suivant l'une quelconque des revendications 15 à 17 **caractérisée en ce qu'**on introduit dans le malaxeur un additif plastifiant.

19. Procédé suivant la revendication 18 **caractérisé en ce que** la quantité d'additif plastifiant introduite est comprise entre 0 et 10% du poids total de la pâte.

20. Procédé suivant l'une quelconque des revendications 15 à 19 **caractérisé en ce que** le malaxeur comporte un dispositif de refroidissement qui maintient la température en dessous de 85°C.

21. Matériau souple précurseur de réfractaire sous forme de fil ou bourrelet obtenu par extrusion de la pâte précurseur de réfractaire définie par l'une quelconque des revendications 1 à 14.

22. Matériau souple précurseur de réfractaire sous forme de nappes ou de bandes obtenu par roulage ou pressage de la pâte précurseur de réfractaire définie par l'une quelconque des revendications 1 à 14.

23. Matériau souple précurseur de réfractaire sous forme de granulés obtenus par découpage fin de la pâte précurseur de réfractaire définie par l'une quelconque des revendications 1 à 14.

24. Utilisation de la pâte précurseur de réfractaire définie par l'une quelconque des revendications 1 à 14 comme joints d'étanchéité pour des utilisations à haute température, en particulier supérieures à 400°C.

25. Utilisation de la pâte précurseur de réfractaire définie par l'une quelconque des revendications 1 à 14 comme isolant thermique pour des utilisations à haute température, en particulier supérieures à 400°C.

26. Utilisation de la pâte précurseur de réfractaire définie par l'une quelconque des revendications 1 à 14 comme gaine extérieure ou gaine de bourrage d'un câble électrique.

27. Utilisation de la pâte précurseur de réfractaire définie par l'une quelconque des revendications 1 à 14 comme joint coupe-feu ou panneau coupe-feu.

## Patentansprüche

1. Pastenförmiges Vorprodukt für Feuerfestmaterial, **dadurch gekennzeichnet, dass** es ein elastisches Polymer enthält, das einerseits mit einem Gemisch aus Aluminiumoxid und Aluminiumhydroxid oder auch Magnesiumhydroxid angereichert ist und andererseits ein Silylierungsmittel enthält.

2. Paste nach Anspruch 1, **dadurch gekennzeichnet, dass** das elastische Polymer der Ethylenpropylendien-Familie angehört.

3. Paste nach Anspruch 1 und 2, **dadurch gekennzeichnet, dass** das elastische Polymer Ethylenpropylendien-Monomer (EPDM) ist.

4. Paste nach einem der Ansprüche 1 bis 3, **dadurch gekennzeichnet, dass** das Aluminiumoxid gemahlenes Aluminiumoxid ist mit einer Korngröße von 0,5 bis 10 µm, was einer spezifischen Oberfläche von 0,5 bis 15 m²/g entspricht.

5. Paste nach einem der Ansprüche 1 bis 4, **dadurch gekennzeichnet, dass** das Aluminiumhydroxid eine Korngröße zwischen 3 und 20 µm, bevorzugt zwischen 5 und 15 µm hat.

6. Paste nach einem der Ansprüche 1 bis 5, **dadurch gekennzeichnet, dass** das Silylierungsmittel ein Trialkoxysilan mit organischen Funktionen ist.

7. Paste nach Anspruch 6, **dadurch gekennzeichnet, dass** das Silylierungsmittel (3-Glycidoxypropyl)trimethoxysilan ist.

8. Paste nach Anspruch 6, **dadurch gekennzeichnet, dass** das Silylierungsmittel (N-Aminoethyl-3)aminopropyltrimethoxysilan ist.

9. Paste nach einem der Ansprüche 1 bis 5, **dadurch gekennzeichnet, dass** das Silylierungsmittel ein Polysilsesquioxan ist.

10. Paste nach einem der Ansprüche 1 bis 5, **dadurch gekennzeichnet, dass** das Silylierungsmittel ein Polysilazan ist.

11. Paste nach einem der Ansprüche 1 bis 10, **dadurch gekennzeichnet, dass** sie einen Weichmacher enthält.

12. Paste nach Anspruch 11, **dadurch gekennzeichnet, dass** die Weichmachermenge 0 bis 10 % des Gesamtgewichts der Paste beträgt.

13. Paste nach Anspruch 11 und 12, **dadurch gekennzeichnet, dass** es sich bei dem Weichmacher um das Öl Primsol 352 von Esso handelt.

14. Paste nach einem der Ansprüche 1 bis 13, **dadurch gekennzeichnet, dass** die Anteile am Gesamtgewicht der Paste die folgenden sind: Aluminiumoxid 30 bis 40 %, Aluminiumhydroxid oder Magnesiumhydroxid 30 bis 40 %, Silylierungsmittel 5 bis 15 %, elastisches Polymer 10 bis 20 %, Weichmacher 0 bis 10 %.

15. Verfahren zur Herstellung eines pastenförmigen Vorproduktes nach einem der Ansprüche 1 bis 14, **dadurch gekennzeichnet, dass** es folgende Verfahrensschritte aufweist:
a) Erwärmen des Mischers auf eine Temperatur zwischen 40 und 60°C, bevorzugt zwischen 40 und 50°C.
b) Einbringen in den Mischer des elastischen Polymers, des Silylierungsmittels, des Aluminiumoxids und Aluminiumhydroxids oder Magnesiumhydroxids.
c) Mischen der Charge so lange, bis eine homogene Paste entsteht.

16. Verfahren nach Anspruch 15, **dadurch gekennzeichnet, dass** das Silylierungsmittel vorher hydrolysiert wurde.

17. Verfahren nach einem der Ansprüche 15 bis 16, **dadurch gekennzeichnet, dass** die Herstellung des Silanols durch Hydrolyse in einem Rührgefäß erfolgt, dass das Silan Wasser mit einem kontrollierten pH-Wert beigemischt wird und dass das Molverhältnis Wasser/Silan 4 bis 7 beträgt.

18. Verfahren nach einem der Ansprüche 15 bis 17, **dadurch gekennzeichnet, dass** in den Mischer ein Weichmascher eingebracht wird.

19. Verfahren nach Anspruch 18, **dadurch gekennzeichnet, dass** die eingebrachte Weichmachermenge 0 bis 10 % des Gesamtgewichts des Paste beträgt.

20. Verfahren nach einem der Ansprüche 15 bis 19, **dadurch gekennzeichnet, dass** der Mischer eine Kühlvorrichtung aufweist, die die Temperatur unterhalb 85°C hält.

21. Weichelastisches Vorprodukt für Feuerfestmaterial in Form von Draht oder Bund, hergestellt durch Strangpressen des durch einen der Ansprüche 1 bis 14 definierten, pastenförmigen Vorproduktes für Feuerfestmaterial.

22. Weichelastisches Vorprodukt für Feuerfestmaterial in Form von Bahnen oder Bändern, hergestellt durch Rollen oder Pressen des durch einen der Ansprüche 1 bis 14 definierten, pastenförmigen Vorproduktes für Feuerfestmaterial.

23. Weichelastisches Vorprodukt für Feuerfestmaterial in Form von Granulat, hergestellt durch Feinschneiden des durch einen der Ansprüche 1 bis 14 definierten, pastenförmigen Vorproduktes für Feuerfestmaterial.

24. Verwendung des durch einen der Ansprüche 1 bis 14 definierten, pastenförmigen Vorproduktes für Feuerfestmaterial als Dichtung für Einsätze bei hohen Temperaturen, insbesondere höher als 400°C.

25. Verwendung des durch einen der Ansprüche 1 bis 14 definierten, pastenförmigen Vorproduktes für Feuerfestmaterial als Wärmeisolierung für Einsätze bei hohen Temperaturen, insbesondere höher als 400°C.

26. Verwendung des durch einen der Ansprüche 1 bis 14 definierten, pastenförmigen Vorproduktes für Feuerfestmaterial als Außenmantel oder Hülle für elektrische Kabel.

27. Verwendung des durch einen der Ansprüche 1 bis 14 definierten, pastenförmigen Vorproduktes für Feuerfestmaterial als Brandschutzdichtung oder Brandschutzplatte.

## Claims

1. Precursor paste for refractory material **characterized in that** it contains an elastomer polymer containing firstly a mixture of alumina and alumina hydrate or magnesium hydroxide, and secondly a silylation agent.

2. Paste according to claim 1, **characterized in that** the elastomer polymer belongs to the ethylene propylene diene family.

3. Paste according to claims 1 and 2, **characterized in that** the elastomer polymer is ethylene propylene diene monomer (EPDM).

4. Paste according to any of claims 1 to 3, **characterized in that** the alumina is a ground alumina having a particle size of 0.5 to 10 microns, corresponding to a specific surface area of 0.5 to 15 m2/g.

5. Paste according to any of claims 1 to 4, **characterized in that** the alumina hydrate has a particle size of between 3 and 20 microns, preferably between 5 and 15 microns.

6. Paste according to any of claims 1 to 5, **characterized in that** the silylation agent is a trialkoxysilane carrying organic functions.

7. Paste according to claim 6, **characterized in that** the silylation agent is (3-glycidoxy propyl) trimethoxysilane.

8. Paste according to claim 6, **characterized in that** the silylation agent is (N-aminoethyl-3)aminopropyltrimethoxysilane.

9. Paste according to any of claims 1 to 5, **characterized in that** the silylation agent is a polysilsesquioxane.

10. Paste according to any of claims 1 to 5 **characterized in that** the silylation agent is a polysilazane.

11. Paste according to any of claims 1 to 10, **characterized in that** it contains a plasticizing additive.

12. Paste according to claim 11, **characterized in that** the quantity of additive lies between 0 and 10 % of the total weight of the paste.

13. Paste according to claim 11 and 12, **characterized in that** the plasticizing additive is Primsol 352 oil by Esso.

14. Paste according to any of claims 1 to 13, **characterized in that** the proportions per total weight of paste are: alumina 30 to 40 %, alumina hydrate or magnesium hydroxide 30 to 40 %, silylation agent 5 to 15 %, elastomer polymer 10 to 20 %, plasticizer 0 to 10 %.

15. Process for manufacturing a precursor paste for refractory materials according to any of claims 1 to 14, **characterized in that** it comprises the following steps:
a) Preheating a mixer to a temperature of between 40 and 60°C, preferably between 40 and 50°C.
b) Adding to the mixer the elastomer polymer, silylation agent, alumina and the alumina hydrate or magnesium hydroxide.
c) Mixing the contents until a homogeneous paste is obtained.

16. Process according to claim 15, **characterized in that** the silylation agent is previously hydrolysed.

17. Process according to either of claims 15 and 16, **characterized in that** the preparation of silanol by hydrolysis is conducted in a stirred container, that the silane is mixed with water having an adjusted pH and that the ratio of the number of moles of water to the number of moles of silane lies between 4 and 7.

18. Process according to any of claims 15 to 17, **characterized in that** a plasticizing additive is added to the mixer.

19. Process according to claim 18, **characterized in that** the quantity of plasticizing additive added is between 0 and 10 % of the total weight of the paste.

20. Process according to any of claims 15 to 19, **characterized in that** the mixer comprises a cooling device which maintains the temperature below 85°C.

21. Soft refractory precursor material in yarn or roll form obtained by extruding the precursor paste for refractory material defined by any of claims 1 to 14.

22. Soft refractory precursor material in the form of sheets or strips obtained by rolling or pressing the precursor paste for refractory material defined by any of claims 1 to 14.

23. Soft refractory precursor material in the form of granules obtained by fine cutting the precursor paste for refractory material defined by any of claims 1 to 14.

24. Use of the precursor paste for refractory material defined by any of claims 1 to 14 as seals for high temperature uses, in particular greater than 400°C.

25. Use of the precursor paste for refractory material defined by any of claims 1 to 14 as heat insulating material for high temperature uses, in particular greater than 400°C.

26. Use of the precursor paste for refractory material defined by any of claims 1 to 14 as an outer sheath or packing for electric cables.

27. Use of the precursor paste for refractory material defined by any of claims 1 to 14 as fireproof seals or fireproof panels.
